# EUROPÄISCHE PATENTSCHRIFT

(11) **EP 1 066 168 B1**
(45) Veröffentlichungstag und Bekanntmachung des Hinweises auf die Patenterteilung: **26.05.2004**
(21) Anmeldenummer: 00910509.9
(22) Anmeldetag: 31.01.2000
(51) Int. Cl.: B60K 25/02, F02B 73/00

(54) **ANTRIEBSANORDNUNG FÜR WENIGSTENS EIN NEBENAGGREGAT EINES KRAFTFAHRZEUGS UND VERFAHREN ZUM BETRIEB DER ANTRIEBSANORDNUNG**
DRIVE ARRANGEMENT FOR AT LEAST ONE SECONDARY AGGREGATE OF A MOTOR VEHICLE AND METHOD FOR OPERATING THE DRIVE ARRANGEMENT
ENSEMBLE ENTRAINEMENT DESTINE A AU MOINS UN GROUPE AUXILIAIRE D'UN VEHICULE AUTOMOBILE, ET PROCEDE PERMETTANT DE FAIRE FONCTIONNER CET ENSEMBLE ENTRAINEMENT

(30) Priorität: 01.02.1999 DE 19903864; 28.10.1999 DE 19951833; 15.12.1999 DE 19960681; 15.01.2000 DE 10001436
(43) Veröffentlichungstag der Anmeldung: 10.01.2001
(73) Patentinhaber: ROBERT BOSCH GMBH, 70442 Stuttgart (DE)
(72) Erfinder: SCHUSTEK, Siegfried, D-71254 Ditzingen (DE); HESSE, Ullrich, D-71563 Affalterbach (DE); DAMSON, Daniel, D-71254 Ditzingen (DE); WEISS, Hans-Ruediger, D-70193 Stuttgart (DE); SCHNELLE, Klaus-Peter, D-71254 Ditzingen (DE)
(86) Internationale Anmeldenummer: PCT/DE2000/000243
(87) Internationale Veröffentlichungsnummer: WO 2000/046059

(56) Entgegenhaltungen:
- EP-A- 0 645 271
- US-A- 4 481 841
- US-A- 5 468 194

## Beschreibung

Die Erfindung betrifft eine Antriebsanordnung für wenigstens ein Nebenaggregat eines Kraftfahrzeugs mit den im Oberbegriff des Anspruchs 1 genannten Merkmalen sowie ein Verfahren zum Betrieb einer derartigen Antriebsanordnung mit den im Oberbegriff des Anspruchs 13 genannten Merkmalen.

### Stand der Technik

Eine derartige Anordnung bzw. ein derartiges Verfahren ist aus der EP 0 645 271 bekannt.

Antriebsanordnungen der gattungsgemäßen Art sind bekannt und werden beispielsweise in Kraftfahrzeugen eingesetzt. Eine Brennkraftmaschine dient dabei üblicherweise als Antriebsaggregat für das Kraftfahrzeug. Daneben kann die Brennkraftmaschine zum Betrieb zahlreicher Nebenaggregate genutzt werden. Derartige Nebenaggregate müssen häufig in einem bestimmten Drehzahlbereich betrieben werden, so dass bekannt ist, über ein zwischengeschaltetes Getriebe eine entsprechende Übersetzung zu ermöglichen. Da jedoch eine Leistungsanforderung der Nebenaggregate zumeist unabhängig von der Leistungsanforderung des Antriebsaggregates ist, hat es sich als vorteilhaft erwiesen, einen Zusatzmotor zum Betrieb der Nebenaggregate in dem Kraftfahrzeug zu integrieren. Der Zusatzmotor liefert damit unabhängig von einer fahrdynamischen Situation des Kraftfahrzeugs ein Drehmoment, das zum Betrieb der Nebenaggregate genutzt werden kann. Der Zusatzmotor kann dabei eine zweite Brennkraftmaschine sein, aber auch als elektrische Maschine ausgelegt sein.

Es ist ferner bekannt, ein unterstützendes Drehmoment zum Betrieb der Nebenaggregate durch die Brennkraftmaschine zur Verfügung zu stellen. Dabei ist allerdings die Brennkraftmaschine bei den bekannten Anordnungen direkt mit einem Startergenerator gekuppelt, das heißt, ein Drehmoment der Brennkraftmaschine wird zunächst in eine elektrische Leistung gewandelt und zum Betrieb von nicht elektrischen Nebenaggregaten muss diese wieder in eine mechanische Leistung transformiert werden. Insgesamt ergibt sich damit nur ein sehr ungünstiger Wirkungsgrad.

Die Nachteile bekannter Antriebsanordnungen zeigen sich insbesondere beim Betrieb von Klimakompressoren. So ist es zwar bekannt, derartige Kompressoren direkt über die Brennkraftmaschine zu betreiben, jedoch muss in diesem Fall eine Leistungsauslegung des Kompressors entsprechend einer Leerlaufdrehzahl der Brennkraftmaschine erfolgen. Einerseits führt dies zu überdimensionierten Klimakompressoren, und andererseits hat es sich als ungünstig erwiesen, Nebenaggregate dieser Art direkt der Brennkraftmaschine zuzuordnen. So können beispielsweise bei einem Beschleunigungsvorgang oder in einer Startphase der Brennkraftmaschine Drehmomentsanforderungen des Klimakompressors den fahrdynamischen Betrieb oder Start stören. Zur Abhilfe ist es daher bekannt, einen zweiten Klimakompressor, der elektrisch betrieben wird, in dem Kraftfahrzeug zu integrieren. Der elektrische Antrieb erfolgt üblicherweise über den Startergenerator als auch über die Bordnetzbatterie. Neben dem erhöhten Materialaufwand ist jedoch nachteilig, dass ein Wandlungswirkungsgrad des Startergenerators als auch ein Lade- und Entladungswirkungsgrad der Bordnetzbatterie energetisch nicht optimal sind und damit letztendlich zu einem erhöhten Kraftstoffverbrauch führen.

Weiterhin sind Planetengetriebe bekannt, bei denen wenigstens ein Planetenrad um ein feststehendes Sonnenrad kreist. Wahlweise kann ein Abtrieb bei Planetengetrieben über eine Ausgangswelle erfolgen, die mit dem Planetenrad und/oder dem Sonnenrad wirkverbunden ist. In das Planetengetriebe greifen ferner zwei Eingangswellen, die unabhängig voneinander ein Drehmoment übertragen, aus dem das Drehmoment der Ausgangswelle resultiert. Durch eine geeignete Auslegung des Planetengetriebes kann eine Übersetzung der Eingangsdrehzahlen der Eingangswellen zur Ausgangsdrehzahl der Ausgangswellen gewählt werden. Eine Ausgestaltung des Abtriebs ist in hohem Maße variabel und kann beispielsweise über ein Hohlrad, das mit dem Planetenrad wirkverbunden ist, erfolgen.

### Vorteile der Erfindung

Die erfindungsgemäße Antriebsanordnung hat den Vorteil, dass ein Betrieb der Nebenaggregate sowohl über den wenigstens einen Zusatzmotor als auch über die Brennkraftmaschine erfolgen kann. In bestimmten Fahrsituationen, beispielsweise während des Starts oder eines Überholvorgangs, kann das Drehmoment für den Betrieb der Nebenaggregate größtenteils durch den Zusatzmotor zur Verfügung gestellt werden, während im normalen Fahrbetrieb, beispielsweise ab einer bestimmten Drehzahl der Brennkraftmaschine, der Betrieb überwiegend über das von der Brennkraftmaschine zur Verfügung gestellte Drehmoment erfolgt. Ein solcher Betrieb kann dadurch verwirklicht werden, dass das Getriebe ein Planetengetriebe ist und das mit der Brennkraftmaschine und dem wenigstens einen Zusatzmotor über jeweils eine Eingangswelle sowie mit dem Nebenaggregat über eine Ausgangswelle wirkverbunden ist.

Der Zusatzmotor kann eine zweite Brennkraftmaschine sein, die beispielsweise nur im Stand in Betrieb gesetzt wird. Über eine Ausgangswelle des Planetengetriebes werden nicht notwendigerweise alle Nebenaggregate, wie beispielsweise ein Generator, der Klimakompressor, eine Servopumpe oder eine Wasserpumpe, betrieben. Im Fahrbetrieb kann der Antrieb über den Fahrmotor energetisch vorteilhaft erfolgen. Dieses System hat energetische Vorteile, da der differentielle Wirkungsgrad als Verhältnis von erforderlicher Antriebsleistung für die Nebenaggregate zu dem zusätzlichen Kraftstoffverbrauch insgesamt höher liegt. Der Zusatzmotor kann auch eine elektrische Maschine sein, wie insbesondere ein Startergenerator der Brennkraftmaschine. Es ist demnach möglich, über den Startergenerator in bestimmten Betriebssituationen beispielsweise den Klimakompressor zu betreiben.

Weiterhin ist vorteilhaft, dass zum wirkungsgradoptimierten Betrieb von Nebenaggregaten häufig geringere Drehzahlen, als sie durch die Brennkraftmaschine vorgegeben sind, benötigt werden. Mittels einer Übersetzung des Planetengetriebes kann dies in einfacher Weise verwirklicht werden. Das Planetengetriebe kann insbesondere Bestandteil eines Fahrzeuggetriebes sein. Besonders vorteilhaft ist dies bei einem Getriebe mit insgesamt zwei elektrischen Maschinen und zwei Planetengetrieben möglich. Hierbei wird das Nebenaggregat von einer der vorhandenen Getriebewellen angetrieben.

Der Betrieb der Antriebsanordnung kann vorteilhaft derart erfolgen, dass
(a) das Getriebe ein Planetengetriebe ist, mit zumindest zwei Eingangswellen und zumindest einer Ausgangswelle, wobei von der Brennkraftmaschine und dem wenigstens einen Zusatzmotor über jeweils eine der Eingangswellen ein Drehmoment auf die Ausgangswelle und nachfolgend auf das Nebenaggregat übertragen wird und
(b) der Antriebsanordnung eine Steuerungseinrichtung zugeordnet ist, die eine Drehzahl der Ausgangswelle erfasst und die in Abhängigkeit der Drehzahl das Drehmoment des wenigstens einen Zusatzmotors regelt.

Ist der wenigstens eine Zusatzmotor eine elektrische Maschine, so kann das Moment auch negativ werden, indem diese dann als Generator arbeitet. Die Drehzahl der Ausgangswelle der Antriebsanordnung kann mittels eines Sensors erfasst werden und in einer geeigneten Steuerungseinrichtung ausgewertet werden. Nachfolgend kann dann in Abhängigkeit von der erfassten Drehzahl der Zusatzmotor gesteuert werden. Durch eine solche Anordnung kann der Betrieb des Nebenaggregates innerhalb eines vorgegebenen eingegrenzten Drehzahlbereichs (Sollbereich) oder bei einer vorgegebenen Drehzahl (Sollwert) erfolgen.

Bei Kraftfahrzeugen kann der Betrieb einer solchen Antriebsanordnung beispielsweise derart erfolgen, dass in Abhängigkeit von einer Grunddrehzahl oder mittleren Drehzahl der Brennkraftmaschine eine Kraftübertragung des Zusatzmotors gesteuert wird. Liegt beispielsweise die Drehzahl der Ausgangswelle der Antriebsanordnung unterhalb eines Grenzwertes, so erfolgt eine zusätzliche Kraftübertragung über die Eingangswelle des Zusatzmotors. Ist die Drehzahl größer als der Grenzwert, so wird ein Krafteintrag des Zusatzmotors reduziert. Im letzteren Fall kann, sofern es sich bei dem Zusatzmotor um eine elektrische Maschine handelt, diese mit Hilfe geeigneter Stellmittel als Generator oder elektrische Bremse auch mit Drehrichtungsumkehr betrieben werden und so eine auftretende Schlupfleistung der Brennkraftmaschine in elektrische Energie gewandelt werden.

Die erfindungsgemäße Antriebsanordnung hat sich als besonders vorteilhaft erwiesen, wenn das zu betreibende Nebenaggregat ein Klimakompressor ist. Zum einen kann durch die Entkopplung von der Leerlaufdrehzahl der Brennkraftmaschine eine Dimensionierung des Klimakompressors geringer ausgelegt werden. Verluste, wie sie heute bei geregelten Klimaverdichtern im Teillastgebiet auftreten, können vermieden werden. Zum anderen birgt die Abstützung des von dem Klimakompressor benötigten Drehmomentes durch den Zusatzmotor weitere Vorteile beim Betrieb des Kraftfahrzeugs in bestimmten Fahrtsituationen. So kann der Klimakompressor durchgehend betrieben werden, auch wenn die Brennkraftmaschine infolge eines kraftstoffsparenden Start-Stop-Betriebs abgeschaltet wird. Weiterhin kann bei besonders hohen Leistungsanforderungen des Antriebsaggregates an die Brennkraftmaschine die Leistung des Zusatzmotors entsprechend erhöht werden, so dass kurzfristig die volle Leistung der Brennkraftmaschine zum Antrieb des Kraftfahrzeugs genutzt werden kann. In dem Falle, in dem der Zusatzmotor eine elektrische Maschine ist (insbesondere ein Startergenerator), kann eine Standklimatisierung oder Vorkühlung des Kraftfahrzeugs erfolgen.

Eine Steuerung des Zusatzmotors kann vorteilhafterweise in Abhängigkeit von einer Fahrsituation (zum Beispiel Stillstand, Fahrt) und einem Betriebszustand der Brennkraftmaschine (zum Beispiel ausgeschaltet, läuft) erfolgen. Steht beispielsweise das Fahrzeug und ist die Brennkraftmaschine abgeschaltet, so wird zunächst über einen Getriebesteller ein Leerlauf geschaltet. Anschließend erfolgt der Antrieb des Nebenaggregats (zum Beispiel Klimakompressor) über die elektrische Maschine (zum Beispiel Startergenerator). Bei Klimakompressoren hat es sich insofern als vorteilhaft erwiesen, eine Maximaldrehzahl und/oder eine Drehzahlspreizung zwecks störungsfreiem Betrieb zu begrenzen. Dies kann beispielsweise mit Hilfe einer Stirnradstufe und/oder einer dem Klimakompressor vorgeschalteten, umschaltbaren Übersetzung realisiert werden.

Weitere bevorzugte Ausgestaltungen der Erfindung ergeben sich aus den übrigen, in den Unteransprüchen genannten Merkmalen.

### Zeichnungen

Die Erfindung wird nachfolgend in einem Ausführungsbeispiel anhand der zugehörigen Zeichnungen näher erläutert. Es zeigen:
- Figur 1: ein schematisches Blockschaltbild einer ersten Antriebsanordnung mit einer elektrischen Maschine als Ersatzmotor;
- Figur 2: eine schematische Schnittansicht durch ein Getriebe einer Antriebsanordnung;
- Figur 3: ein Drehzahldiagramm für eine erfindungsgemäße Antriebsanordnung;
- Figur 4: eine schematische Draufsicht auf eine zweite Antriebsanordnung mit einer zweiten Brennkraftmaschine als Zusatzmotor und
- Figur 5: ein Prinzipschaltbild einer Antriebsanordnung mit einem Fahrzeuggetriebe mit zwei Elektromaschinen, einer Brennkraftmaschine und einem Klimakompressor als Zusatzaggregat.

### Beschreibung des Ausführungsbeispiels

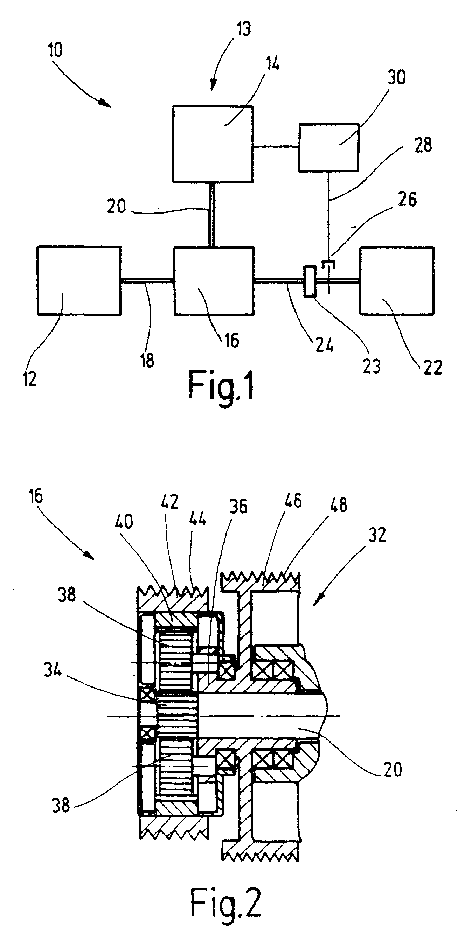

In der Figur 1 ist ein schematisches Blockschaltbild einer Antriebsanordnung 10 in einem ersten Ausführungsbeispiel dargestellt, wobei die Antriebsanordnung 10 aus einer Brennkraftmaschine 12, einer elektrischen Maschine 14 als ein Zusatzmotor 13 und einem Getriebe 16 besteht. Die Brennkraftmaschine 12 ist über eine Eingangswelle 18 und die elektrische Maschine 14 über eine Eingangswelle 20 mit dem Getriebe 16 verbunden. Ferner ist ein Nebenaggregat 22 dargestellt, das über eine Ausgangswelle 24 und eine Freilaufkupplung 23 mit dem Getriebe 16 wirkverbunden ist. Mittels eines Sensors 26 kann eine Drehzahl der Ausgangswelle 24 erfasst werden und über eine Datenleitung 28 zu einer Steuerungseinrichtung 30 übermittelt werden, von der aus ein Betrieb der elektrischen Maschine 14 gesteuert werden kann.

Der Betrieb des Nebenaggregates 22 soll nach Möglichkeit bei einer günstigen Drehzahl (Sollwert) oder in einem günstigen Drehzahlbereich (Sollbereich) der Ausgangswelle 24 erfolgen. Mittels der Antriebsanordnung 10 kann dieser Drehzahlbereich in einfacher weise und mit einem insgesamt günstigen Wirkungsgrad verwirklicht werden. Der Drehzahlbereich weist einen oberen und unteren Grenzwert auf.

Zunächst wird ein Drehmoment von der Brennkraftmaschine 12 über die Eingangswelle 18 auf das Getriebe 16 übertragen und von dem Getriebe 16 nachfolgend an die Ausgangswelle 24 weitergegeben. Ist die Drehzahl der Ausgangswelle 24 geringer als der untere Grenzwert, so wird zusätzlich ein Drehmoment mittels der elektrischen Maschine 14 über die Eingangswelle 20 auf das Getriebe 16 übertragen. Übersteigt die Drehzahl der Ausgangswelle 24 den oberen Grenzwert, so wird zum einen eine überschüssige Leistung der Brennkraftmaschine 12 als Schlupfleistung abgegeben, und zum anderen wird eine ungewünschte Kraftübertragung durch die elektrische Maschine 14 unterbunden. Im letzteren Fall kann jedoch auch die Schlupfleistung zur Erzeugung von elektrischer Energie genutzt werden, indem die elektrische Maschine 14 mittels geeigneter Stellmittel als ein Generator betrieben wird. Weiterhin kann die elektrische Maschine 14 auch als eine elektrische Bremse betrieben werden.

Mittels der Steuerungseinrichtung 30 kann zum einen die Drehzahl der Ausgangswelle 24 über den Sensor 26 erfasst sowie geregelt werden. Zum anderen dient die Steuerungseinrichtung 30 der Einstellung eines Betriebszustandes der elektrischen Maschine 14. Wie bereits erläutert, kann die elektrische Maschine 14 dann wahlweise als Generator oder als Antrieb geschaltet werden.

Die Figur 2 zeigt eine Schnittansicht des Getriebes 16 der Antriebsanordnung 10. Das Getriebe 16 ist dabei ein Planetengetriebe 32 mit einem Sonnenrad 34 und den Planetenrädern 38. Das Sonnenrad 34 ist fest mit der Eingangswelle 20 der elektrischen Maschine 14 verbunden und weist eine Zahnung auf, die in eine komplementäre Zahnung der Planetenräder 38 greift. Weiterhin weist das Planetengetriebe 32 einen Träger 36 auf, der einerseits mit den Planetenrädern 38 und andererseits mit einer Riemenscheibe 46, die eine Zahnung 48 hat, wirkverbunden ist. Mittels eines hier nicht dargestellten Zugmittels (Riemens) wird das Drehmoment der Brennkraftmaschine 12 auf die Riemenscheibe 46 und nachfolgend auf die Planetenräder 38 übertragen.

Ferner ist den Planetenrädern 38 ein Hohlrad 40 mit geeigneter Zahnung zugeordnet, welches fest mit einer weiteren Riemenscheibe 42 verbunden ist, die eine Zahnung 44 aufweist. Über ein hier nicht dargestelltes weiteres Zugmittel (Riemen), das auf der Riemenscheibe 42 sitzt, erfolgt eine Kraftübertragung auf die hier ebenfalls nicht dargestellte Eingangswelle 24 des Nebenaggregats 22.

Anstelle der Riemenscheiben 42, 46 können auch geeignete Zahnräder für die Kraftübertragung zwischen dem Planetengetriebe 32 und der Brennkraftmaschine 12 beziehungsweise dem Nebenaggregat 22 eingesetzt werden. Weiterhin ist die Anzahl der Planetenräder 38 variabel, und durch eine geeignete Auslegung des Planetengetriebes 32 kann eine gewünschte Übersetzung verwirklicht werden.

Neben dem in Figur 2 dargestellten Abtrieb, bei dem das Sonnenrad 34 über die Planetenräder 38 nur indirekt das Drehmoment der Eingangswelle 20 der elektrischen Maschine 14 überträgt, sind auch Getriebe 16 denkbar, bei denen eine direkte Kraftübertragung von dem Sonnenrad 34 und eine indirekte Kraftübertragung von den Planetenrädern 38 über das Sonnenrad 34 verwirklicht sind. In diesem Fall ist ein hier nicht dargestelltes Zahnrad mit dem Sonnenrad 34 und der Ausgangswelle 24 in geeigneter Weise wirkverbunden. Damit können auch mehrere Nebenaggregate 22 unter wenigstens zwei Übersetzungen angetrieben werden. Erfolgt der Abtrieb über die Planetenräder 38, so sind Übersetzungen in einem Bereich von zirka 1,25 bis 1,67 und bei einem Abtrieb über das Sonnenrad 34 sind Übersetzungen von zirka 2,5 bis 6 bevorzugt.

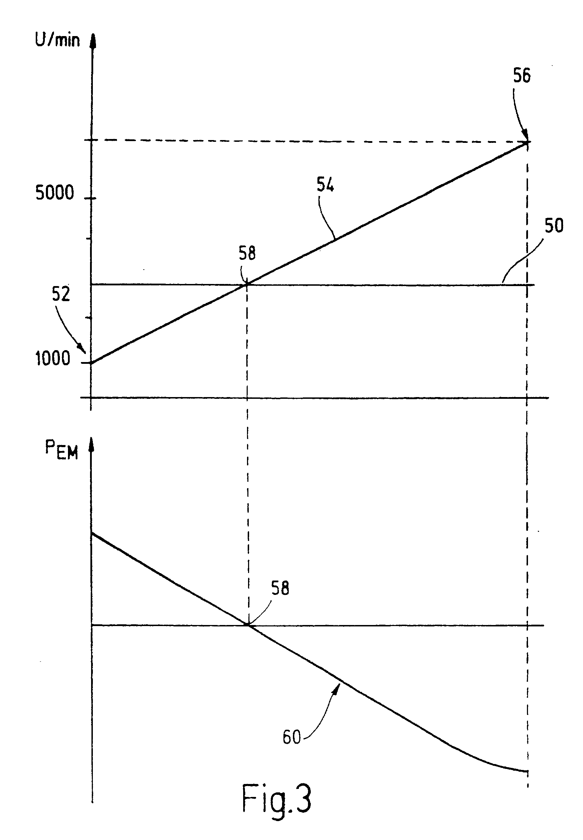

Die Figur 3 zeigt in zwei beispielhaften Diagrammen, wie eine Steuerung und/oder Regelung der elektrischen Maschine 14 in der Antriebsanordnung 10 erfolgen kann. In dem oberen Diagramm ist eine Drehzahl 50 der Ausgangswelle 24 des Antriebsaggregates 10 eingetragen. Der Wert 50 der Drehzahl kann selbstverständlich entsprechend den Erfordernissen des zu betreibenden Nebenaggregates 22 gewählt werden. Ausgehend von einer Grunddrehzahl 52 der Brennkraftmaschine 14, die hier beispielhaft bei 1000 U/min liegt, erstreckt sich eine Gerade 54 bis zu einer maximalen Drehzahl 56 der Brennkraftmaschine 14. Um die Drehzahl 50 der Ausgangswelle 24 konstant zu halten, muss daher entweder eine Leistung zugeführt oder weggenommen werden. Im letzteren Fall kann die überschüssige Leistung als eine Schlupfleistung ungenutzt bleiben, oder sie kann dazu benutzt werden, einen Generator anzutreiben. Da die Zufuhr der Leistung unterhalb der Drehzahl 50 über die elektrische Maschine 14 erfolgt, ist es besonders vorteilhaft, diese derart auszulegen, dass sie oberhalb der Drehzahl 50 als Generator betrieben werden kann.

Im unteren Diagramm der Figur 3 ist die Leistung der elektrischen Maschine 14 in Abhängigkeit von der Drehzahl der Brennkraftmaschine 12 dargestellt. Es wird deutlich, dass bis zu einem Punkt 58, in dem die Drehzahl der Brennkraftmaschine 12 unterhalb der Drehzahl 50 liegt, eine entsprechende Leistung durch die elektrische Maschine 14 beigesteuert wird. Übersteigt die Drehzahl der Brennkraftmaschine 12 in dem Punkt 58 die Drehzahl 50 der Ausgangswelle 24, so wird die elektrische Maschine 14 hier derart geschaltet, dass sie als Generator betrieben werden kann. Um eine Überhitzung im Generatorbetrieb zu vermeiden, kann bei großen Drehzahlen der Brennkraftmaschine 12 die übertragene Leistung begrenzt werden und als Schlupfleistung ungenutzt bleiben, so dass eine Leistungskurve 60 der elektrischen Maschine 14 bei höheren Drehzahlen der Brennkraftmaschine 12 degressiv verläuft. Eine Steuerung der elektrischen Maschine 14 kann - wie bereits erläutert - über die Steuerungseinrichtung 30 erfolgen.

Als zu betreibende Nebenaggregate 22 des Kraftfahrzeugs kommen beispielsweise in Frage ein Generator, eine Servopumpe, eine Wasserpumpe, eine Ölpumpe oder insbesondere auch ein Klimakompressor. Letzterer kann in seiner Dimensionierung kleiner ausgelegt werden als bei herkömmlichen Antriebsanordnungen, bei denen der Klimakompressor direkt über die Brennkraftmaschine 12 betrieben wird, denn ein Drehzahlbereich des Klimakompressors muss nicht auf eine Leerlaufdrehzahl der Brennkraftmaschine 12 abgestimmt werden. Um eine Vorkühlung oder Standkühlung des Kraftfahrzeugs zu ermöglichen, kann der Klimakompressor über die elektrische Maschine 14 betrieben werden. Die elektrische Leistung wird dabei über das Getriebe 16 in eine mechanische Leistung konvertiert. So kann beispielsweise bei einer Abschaltung der Brennkraftmaschine 12 infolge eines Start-Stop-Betriebs des Kraftfahrzeugs das von dem Klimakompressor benötigte Drehmoment durch die elektrische Maschine 14 bereitgestellt werden und damit eine kontinuierliche Kühlung eines Innenraums des Kraftfahrzeugs gewährleistet werden.

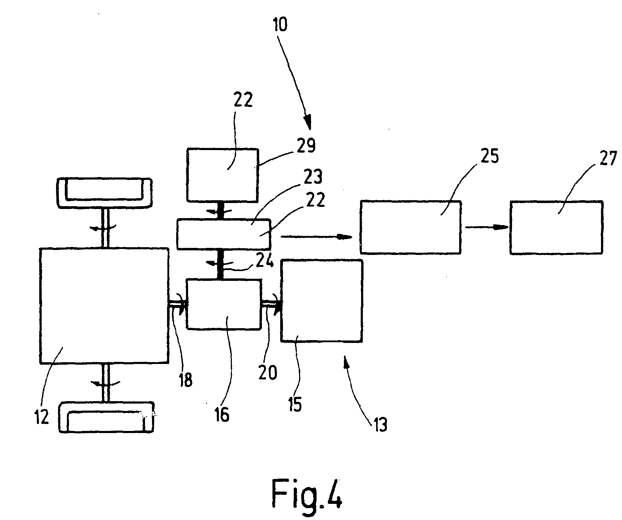

Die Figur 4 zeigt eine schematische Draufsicht auf eine weitere Antriebsanordnung 10, bei der der Zusatzmotor 13 eine zweite Brennkraftmaschine 15 ist. Wie bereits erläutert, werden über die Eingangswellen 18, 20 die Drehmomente auf das Getriebe 16 übertragen und es resultiert ein Drehmoment für die Ausgangswelle 24, das zum Betrieb des Nebenaggregates 22 genutzt wird.

Gemäß dem Ausführungsbeispiel sind insgesamt zwei Nebenaggregate 22 an das Getriebe 16 gekuppelt. So kann einerseits ein Generator 23 elektrische Energie liefern, die in ein Bordnetz 25 eingespeist wird. Nachfolgend kann die elektrische Energie zum Betrieb von elektrischen Nebenaggregaten 27 genutzt werden. Auf der anderen Seite wird über das Getriebe 16 auch der Klimakompressor 29 mit der betriebsnotwendigen Energie versorgt. Eine Steuerung der zweiten Brennkraftmaschine 15 kann in gleicher Weise erfolgen wie bereits in dem vorhergehenden Ausführungsbeispiel geschildert. Aus Gründen der Übersichtlichkeit ist daher auf eine Darstellung der dazu notwendigen Steuerungseinrichtung 30 verzichtet worden.

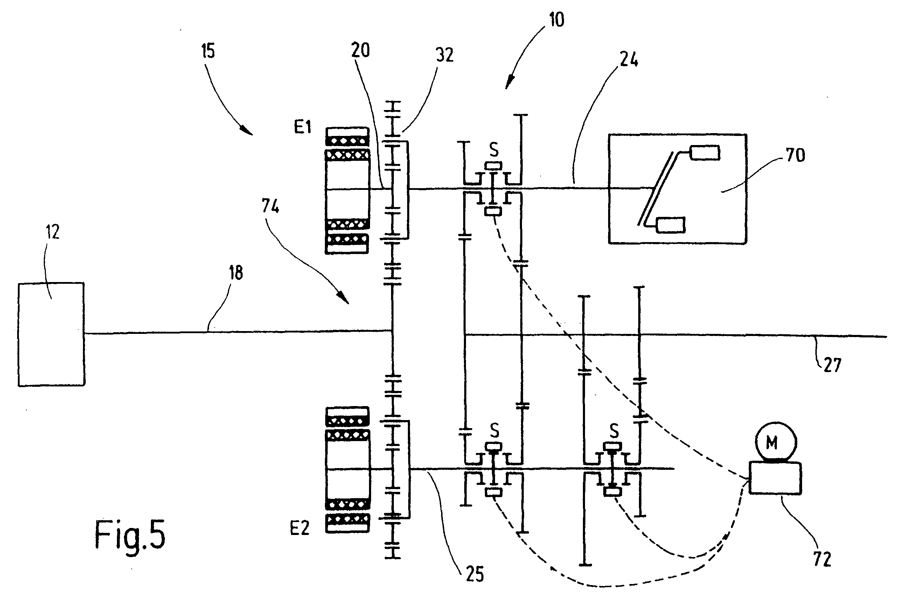

Die Figur 5 zeigt ein Prinzipschaltbild einer Antriebsanordnung 10 mit einem speziellen Fahrzeuggetriebe 74, einer Brennkraftmaschine 12 und einem hiermit betreibbaren Klimakompressor 70. Das Fahrzeuggetriebe 74 enthält wiederum ein Planetengetriebe 32, dem eine erste elektrische Maschine E1 zugeordnet ist. Es enthält ferner ein zweites Planetengetriebe mit einer zweiten elektrischen Maschine E2. Die Ausgangswellen 24 und 25 sind über mit Schiebemuffen S schaltbare Verzahnungen mit der Antriebswelle 27 des Fahrzeugantriebes verbunden. Weiterhin zeigt das Getriebe 16 dieses Ausführungsbeispiels schematisch einen Getriebesteller 72 mit insgesamt drei Schiebemuffen S, die es erlauben ein Übersetzungsverhältnis beziehungsweise einen Leerlauf einzustellen. Mit der gezeigten Anordnung lassen sich folgende Betriebsarten realisieren:
- Bei fahrendem Fahrzeug und laufender Brennkraftmaschine 12 erfolgt der Antrieb des Klimakompressors 70 mechanisch, das heißt, das benötigte Drehmoment wird vom Fahrzeugantrieb über die Welle 24 zur Verfügung gestellt.
- Bei fahrendem Fahrzeug und ausgeschalteter Brennkraftmaschine 12, zum Beispiel bei Brems- und Schwungenergienutzung, erfolgt der Antrieb des Klimakompressors 70 weiterhin rein mechanisch, das heißt, es wird das noch anliegende Moment der Welle 24 genutzt. Da weiterhin Kraftschluss mit einer Antriebswelle 27 der Fahrzeugräder vorliegt, wird das Fahrzeug abgebremst.
- Bei stehendem Fahrzeug und ausgeschalteter Brennkraftmaschine 12 erfolgt der Antrieb des Klimakompressors 70 über die erste elektrische Maschine E1, wobei zuvor durch den Getriebesteller 72 ein Leerlauf geschaltet wurde. Sofern hinreichende Energie durch eine Fahrzeugbatterie zur Verfügung gestellt werden kann, ist demnach bereits eine elektrische Standklimatisierung ohne zusätzliche Speicher oder Komponenten möglich.
- Bei stehendem Fahrzeug und laufender Brennkraftmaschine 12 erfolgt der Antrieb des Klimakompressors 70 mechanisch und elektrisch. Auch hier wird zuvor durch den Getriebesteller 72 ein Leerlauf geschaltet. Ein Antriebsmoment des Klimakompressors 70 wird in diesem Fall durch die elektrische Maschine E1 abgestützt, untersetzt, mit der über das Planetengetriebe 32 gegebenen Übersetzung. Somit kann durch Wahl einer Drehzahl der elektrischen Maschine E1 eine Kompressordrehzahl bestimmt werden.

All diese Funktionen lassen sich durch an sich bekannte Komponenten, die meistens bereits vorhanden sind, realisieren. So ist beispielsweise bei Fahrzeugen mit dem speziellen Getriebe 74 lediglich die Steuerung der elektrischen Maschine E1 und des Getriebestellers 72 entsprechend anzupassen. Gegebenenfalls können in letztgenannter Variante dem Klimakompressor 70 noch weitere Elemente vorgeschaltet werden, wie beispielsweise eine Stirnradstufe oder eine umschaltbare Übersetzung. Auf diese Weise kann eine maximale Drehzahl und eine Drehzahlspreizung der Kompressordrehzahl begrenzt werden und so ein möglichst störungsfreier Betrieb sichergestellt werden.

## Patentansprüche

1. Antriebsanordnung für wenigstens ein Nebenaggregat (22) eines Kraftfahrzeugs, mit einer Brennkraftmaschine (12), wenigstens einem Zusatzmotor (13) und einem Getriebe (16) wobei das Getriebe (16) ein Planetengetriebe (32) ist, das mit der Brennkraftmaschine (12) und dem wenigstens einen Zusatzmotor (13) über jeweils eine Eingangswelle (18, 20) sowie mit dem Nebenaggregat (22) über eine Ausgangswelle (24) wirkverbunden ist, **dadurch gekennzeichnet, dass** der Antriebsanordnung (10) eine Steuerungseinrichtung (30) zugeordnet ist, die eine Drehzahl (50) der Ausgangswelle (24) erfasst und in Abhängigkeit von der Drehzahl (50) den Zusatzmotor (13) regelt und wobei der Zusatzmotor eine zweite Brennkraftmaschine oder eine elektrische Maschine ist.

2. Antriebsanordnung nach Anspruch 1, **dadurch gekennzeichnet, dass** die elektrische Maschine (14) ein Startergenerator der Brennkraftmaschine (12) ist.

3. Antriebsanordnung nach Anspruch 1, **dadurch gekenn-zeichnet, dass** die Steuerungseinrichtung (30) einen Sensor (26) umfasst, der die Drehzahl (50) der Ausgangswelle (24) misst.

4. Antriebsanordnung nach einem der vorhergehenden Ansprüche, **dadurch gekennzeichnet, dass** ein Sonnenrad (34) des Planetengetriebes (32) drehfest mit der Eingangswelle (20) des Zusatzmotors (14) und ein Träger (36) für wenigstens ein Planetenrad (38) mit der Eingangswelle (18) der Brennkraftmaschine (12) verbunden ist.

5. Antriebsanordnung nach einem der vorhergehenden Ansprüche, **dadurch gekennzeichnet, dass** das Nebenaggregat (22) ein Klimakompressor (70) ist.

6. Antriebsanordnung nach Anspruch 5, **dadurch gekennzeichnet, dass** dem Klimakompressor (70) eine Stirnradstufe und/oder eine umschaltbare Übersetzung vorgeschaltet ist.

7. Antriebsanordnung nach Anspruch 1 **dadurch gekennzeichnet, dass** das Nebenaggregat (22) ein Generator ist.

8. Antriebsanordnung nach einem oder mehreren der vorhergehenden Ansprüche, **dadurch gekennzeichnet, dass** eine relativ kleine elektrische Maschine (14) eingesetzt wird, die bei mäßiger Leistungsanforderung einen weiten Regelbereich ermöglicht.

9. Antriebsanordnung nach Anspruch 1, **dadurch gekennzeichnet, dass** das Planetengetriebe (32), die elektrische Maschine (E1) und die Ausgangswelle (24) Bestandteile eines Fahrzeuggetriebes (74) sind.

10. Verfahren zum Betrieb einer Antriebsanordnung für wenigstens ein Nebenaggregat eines Kraftfahrzeugs, mit einer Brennkraftmaschine, wenigstens einem Zusatzmotor und einem Getriebe,
wobei das Getriebe (16) ein Planetengetriebe (32) ist mit zumindest zwei Eingangswellen (18, 20) und zumindest einer Ausgangswelle (24), wobei von der Brennkraftmaschine (12) und dem wenigstens einen Zusatzmotor (13) über jeweils eine der Eingangswellen (18, 20) ein Drehmoment auf die Ausgangswelle (24) und nachfolgend auf das Nebenaggregat (22) übertragen wird und
**dadurch gekennzeichnet, dass** der Antriebsanordnung (10) eine Steuerungseinrichtung (30) zugeordnet ist, die eine Drehzahl (50) der Ausgangswelle (24) erfasst und die in Abhängigkeit der Drehzahl (50) das Drehmoment des wenigstens einen Zusatzmotors (13) regelt.

11. Verfahren nach Anspruch 10, **dadurch gekennzeichnet, dass** der Steuerungseinrichtung (30) ein Sollwert oder ein Sollbereich für die Drehzahl (50) der Ausgangswelle (24) vorgegeben wird.

12. Verfahren nach Anspruch 11, **dadurch gekennzeichnet, dass** der Zusatzmotor (13) eine elektrische Maschine (14) ist, die auch als ein Generator oder elektrische Bremse betrieben werden kann und wenn aus dem von der Brennkraftmaschine (12) übertragenen Drehmoment eine Drehzahl (50) resultiert, die über dem Sollwert oder dem Sollbereich für die Drehzahl (50) der Ausgangswelle (24) liegt, die elektrische Maschine (14) als Generator betrieben wird.

13. Verfahren nach einem der Ansprüche 10 bis 12, **dadurch gekennzeichnet, dass** das Drehmoment des Zusatzmotors (13) erhöht wird, wenn eine Leistungsanforderung an die Brennkraftmaschine (12) in Folge eines Start- oder Beschleunigungsvorgangs des Kraftfahrzeugs erfolgt.

14. Verfahren nach einem der Ansprüche 10 bis 13, **dadurch gekennzeichnet, dass** das Nebenaggregat (22) ein Klimakompressor (70) ist und der Zusatzmotor (13) eine erste elektrische Maschine (E1) eines Fahrzeug-Getriebes (74) ist, wobei in Abhängigkeit von einer Fahrsituation und einem Betriebszustand der Brennkraftmaschine (12) folgende Betriebsarten realisiert werden können:
- bei fahrendem Fahrzeug und laufender Brennkraftmaschine (12) erfolgt der Antrieb des Klimakompressors (70) mechanisch;
- bei fahrendem Fahrzeug und ausgeschalteter Brennkraftmaschine (12), (zum Beispiel bei Brems- oder Schwungenergienutzung), erfolgt der Antrieb des Klimakompressors (70) mechanisch;
- bei stehendem Fahrzeug und ausgeschalteter Brennkraftmaschine (12) erfolgt der Antrieb des Klimakompressors (70) über die erste elektrische Maschine (E1), wobei zuvor durch einen Getriebesteller 72 ein Leerlauf geschaltet wird und
- bei stehendem Fahrzeug und laufender Brennkraftmaschine (12) erfolgt der Antrieb des Klimakompressors (70) mechanisch und elektrisch, wobei zuvor durch den Getriebesteller (72) ein Leerlauf geschaltet wird.

## Claims

1. Drive arrangement for at least one secondary appliance (22) for a motor vehicle, having an internal combustion engine (12), at least one additional motor (13) and a transmission (16), with the transmission (16) being an epicyclic transmission (32) which is connected to the internal combustion engine (12) and to the at least one additional motor (13) via a respective input shaft (18, 20) and is connected to the secondary appliance (22) via an output shaft (24), **characterized in that** the drive arrangement (10) has an associated control device (30) which detects the rotation speed (50) of the output shaft (24) and controls the additional motor (13) as a function of the rotation speed (50), and with the additional motor being a second internal combustion engine or an electrical machine.

2. Drive arrangement according to Claim 1, **characterized in that** the electrical machine (14) is a starter generator for the internal combustion engine (12).

3. Drive arrangement according to Claim 1, **characterized in that** the control device (30) has a sensor (26) which measures the rotation speed (50) of the output shaft (24).

4. Drive arrangement according to one of the preceding claims, **characterized in that** a sun wheel (34) in the epicyclic transmission (32) is connected in a rotationally fixed manner to the input shaft (20) of the additional motor (14), and a mount (36) for at least one planet wheel (38) is connected to the input shaft (18) of the internal combustion engine (12).

5. Drive arrangement according to one of the preceding claims, **characterized in that** the secondary appliance (22) is an air-conditioning compressor (70).

6. Drive arrangement according to Claim 5, **characterized in that** the air-conditioning compressor (70) is preceded by a spur gear stage and/or by switchable gearing.

7. Drive arrangement according to Claim 1, **characterized in that** the secondary appliance (22) is a generator.

8. Drive arrangement according to one or more of the preceding claims, **characterized in that** a relatively small electrical machine (14) is used, and allows a wide control range when the power demand is reasonable.

9. Drive arrangement according to Claim 1, **characterized in that** the epicyclic transmission (32), the electrical machine (E1) and the output shaft (24) are components of a vehicle transmission (74).

10. Method for operation of a drive arrangement for at least one secondary appliance for a motor vehicle, having an internal combustion engine, at least one additional motor and a transmission, with the transmission (16) being an epicyclic transmission (32) having at least two input shafts (18, 20) and at least one output shaft (24), with a torque being transmitted from the internal combustion engine (12) and from the at least one additional motor (13) via in each case one of the input shafts (18, 20) to the output shaft (24), and then being transmitted to the secondary appliance (22), and
**characterized in that**
the drive arrangement (10) has an associated control device (13) which detects the rotation speed (50) of the output shaft (24) and controls the torque of the at least one additional motor (13) as a function of the rotation speed (50).

11. Method according to Claim 10, **characterized in that** a set value or a set range for the rotation speed (50) of the output shaft (24) is predetermined for the control device (30).

12. Method according to Claim 11, **characterized in that** the additional motor (13) is an electrical machine (14) which can also be operated as a generator or as an electrical brake, and the electrical machine (14) is operated as a generator when the torque which is transmitted from the internal combustion engine (12) results in a rotation speed (50) which is above the set value or the set range for the rotation speed (5) of the output shaft (24).

13. Method according to one of Claims 10 to 12, **characterized in that** the torque from the additional motor (13) is increased when power is demanded from the internal combustion engine (12) as a consequence of the motor vehicle starting or accelerating.

14. Method according to one of Claims 10 to 13, **characterized in that** the secondary appliance (22) is an air-conditioning compressor (70), and the additional motor (13) is a first electrical machine (E1) for a vehicle transmission (74) in which case the following operating modes can be provided as a function of a driving situation and an operating state of the internal combustion engine (12):
- when the vehicle is moving and the internal combustion engine (12) is running, the air-conditioning compressor (70) is driven mechanically;
- when the vehicle is moving and the internal combustion engine (12) is switched off, (for example during braking or when using flywheel energy), the air-conditioning compressor (70) is driven mechanically;
- when the vehicle is stationary and the internal combustion engine (12) is switched off, the air-conditioning compressor (70) is driven via the first electrical machine (E1) having previously been switched to no load by a transmission controller 72, and
- when the vehicle is stationary and the internal combustion engine (12) is running, the air-conditioning compressor (70) is driven mechanically and electrically, with no load having previously been selected by the transmission controller (72).

## Revendications

1. Ensemble d'entraînement destiné à au moins un groupe auxiliaire (22) d'un véhicule automobile, doté d'un moteur à combustion interne (12), d'au moins un moteur supplémentaire (13) et d'un engrenage (16), l'engrenage (16) étant un engrenage planétaire (32) en liaison active avec le moteur à combustion interne (12) et l'au moins un moteur supplémentaire (13) à l'aide respectivement d'un arbre d'entrée (18, 20), ainsi qu'en liaison active avec le groupe auxiliaire (22) à l'aide d'un arbre de sortie (24),
**caractérisé en ce qu'**
un dispositif de commande (30) associé à l'ensemble d'entraînement (10) détecte une vitesse de rotation (50) de l'arbre de sortie (24) et règle le moteur supplémentaire (13) en fonction de la vitesse de rotation (50), le moteur supplémentaire étant un deuxième moteur à combustion interne ou un moteur électrique (14).

2. Ensemble d'entraînement selon la revendication 1,
**caractérisé en ce que**
le moteur électrique (14) est un générateur de démarrage du moteur à combustion interne (12).

3. Ensemble d'entraînement selon la revendication 1,
**caractérisé en ce que**
le dispositif de commande (30) comprend un capteur (26) qui mesure la vitesse de rotation (50) de l'arbre de sortie (24).

4. Ensemble d'entraînement selon l'une quelconque des revendications précédentes,
**caractérisé en ce qu'**
une roue solaire (34) de l'engrenage planétaire (32) est reliée à l'arbre d'entrée (20) du moteur supplémentaire (14) de manière résistante à la torsion, et un support (36) destiné à au moins une roue planétaire (38) est relié à l'arbre d'entrée (18) du moteur à combustion interne (12).

5. Ensemble d'entraînement selon l'une quelconque des revendications précédentes,
**caractérisé en ce que**
le groupe auxiliaire (22) est un compresseur de climatisation (70).

6. Ensemble d'entraînement selon la revendication 5,
**caractérisé en ce qu'**
un étage de pignon droit et/ou un rapport de transmission commutable est placé en amont du compresseur de climatisation (70).

7. Ensemble d'entraînement selon la revendication 1,
**caractérisé en ce que**
le groupe auxiliaire (22) est un générateur.

8. Ensemble d'entraînement selon l'une ou plusieurs des revendications précédentes,
**caractérisé en ce qu'**
on utilise un moteur électrique (14) relativement petit, qui permet une large plage de réglage en cas d'exigence de puissance moyenne.

9. Ensemble d'entraînement selon la revendication 1,
**caractérisé en ce que**
l'engrenage planétaire (32), le moteur électrique (E1) et l'arbre de sortie (24) font partie d'une boite de vitesse (74).

10. Procédé pour faire fonctionner un ensemble d'entraînement destiné à au moins un groupe auxiliaire d'un véhicule automobile, doté d'un moteur à combustion interne, d'au moins un moteur supplémentaire et d'un engrenage, l'engrenage (16) étant un engrenage planétaire (32) doté d'au moins deux arbres d'entrée (18, 20) et d'au moins un arbre de sortie (24), un couple de rotation étant transmis à l'arbre de sortie (24) par le moteur à combustion interne (12) et à l'au moins un moteur supplémentaire (13) par l'intermédiaire respectivement de l'un des arbres d'entrée (18, 20), et ensuite transmis au groupe auxiliaire (22),
**caractérisé en ce qu'**
un dispositif de commande (30) associé à l'ensemble d'entraînement (10) détecte une vitesse de rotation (50) de l'arbre de sortie (24) et règle le couple de rotation du au moins un moteur supplémentaire (13) en fonction de la vitesse de rotation (50).

11. Procédé selon la revendication 10,
**caractérisé en ce qu'**
une valeur de consigne ou une plage de consigne pour la vitesse de rotation (50) de l'arbre de sortie (24) est donnée au préalable au dispositif de commande (30).

12. Procédé selon la revendication 11,
**caractérisé en ce que**
le moteur supplémentaire (13) est un moteur électrique (14) pouvant aussi fonctionner comme un générateur ou un frein électrique, et le moteur électrique (14) fonctionne comme un générateur lorsqu'une vitesse de rotation (50) supérieure à la valeur de consigne ou à la plage de consigne de la vitesse de rotation (50) de l'arbre de sortie (24) résulte du couple de rotation transmis par le moteur à combustion interne (12).

13. Procédé selon l'une quelconque des revendications 10 à 12,
**caractérisé en ce que**
le couple de rotation du moteur supplémentaire (13) est augmenté lorsqu'a lieu une exigence de puissance envers le moteur à combustion interne (12) à la suite d'un démarrage ou d'une accélération du véhicule.

14. Procédé selon l'une quelconque des revendications 10 à 13,
**caractérisé en ce que**
le groupe auxiliaire (22) est un compresseur de climatisation (70) et le moteur supplémentaire (13) est un premier moteur électrique (E1) d'une boîte de vitesse (74), les divers types de fonctionnement suivants pouvant être réalisés en fonction d'une situation de conduite et d'un état de fonctionnement du moteur à combustion interne (12) :
- lorsque le véhicule roule et le moteur à combustion interne (12) tourne, l'entraînement du compresseur de climatisation (70) est mécanique,
- lorsque le véhicule roule et le moteur à combustion interne (12) est coupé (par exemple en cas d'utilisation d'énergie de freinage ou centrifuge), l'entraînement du compresseur de climatisation (70) est mécanique,
- lorsque le véhicule est immobile et le moteur à combustion interne (12) est coupé, l'entraînement du compresseur de climatisation (70) est réalisé à l'aide du premier moteur électrique (E1), un ralenti étant commuté au préalable par un dispositif de commande d'engrenage (72) et
- lorsque le véhicule est immobile et le moteur à combustion interne (12) tourne, l'entraînement du compresseur de climatisation (70) est mécanique et électrique, un ralenti étant commuté au préalable par un dispositif de commande d'engrenage (72).
